# EUROPEAN PATENT SPECIFICATION

(11) **EP 4 195 120 B1**
(45) Date of publication and mention of the grant of the patent: **19.11.2025**
(21) Application number: 22210413.5
(22) Date of filing: 30.11.2022
(51) Int. Cl.: G06Q 10/06

(54) **OPERATION INFORMATION MANAGEMENT METHOD, OPERATION INFORMATION MANAGEMENT SYSTEM, AND OPERATION INFORMATION MANAGEMENT PROGRAM**
BETRIEBSINFORMATIONSVERWALTUNGSVERFAHREN, BETRIEBSINFORMATIONSVERWALTUNGSSYSTEM UND BETRIEBSINFORMATIONSVERWALTUNGSPROGRAMM
PROCÉDÉ DE GESTION D'INFORMATIONS D'EXPLOITATION, SYSTÈME DE GESTION D'INFORMATIONS D'EXPLOITATION ET PROGRAMME DE GESTION D'INFORMATIONS D'EXPLOITATION

(30) Priority: 13.12.2021 JP 2021201447
(43) Date of publication of application: 14.06.2023
(73) Proprietor: Yanmar Holdings Co., Ltd., Osaka-shi, Osaka (JP)
(72) Inventor: IMAI, Tomoki, Okayama (JP)
(74) Representative: Sekiguchi, Kazuya

(56) References cited:
- WO-A1-2019/097872
- US-A1- 2015 242 799
- US-A1- 2019 050 947
- US-A1- 2019 226 886
- US-A1- 2021 003 743

## Description

### TECHNICAL FIELD

This present invention relates to an operation information management method, an operation information management system, and an operation information management program.

### BACKGROUND ART

A technique has been proposed for measuring position information on a farm working device at a predetermined sampling interval to transmit to a server and grasping in details a working state in a field through the obtained position information. The shorter the sampling interval gets, the more detailed information can be obtained to grasp the working state. However, when the sampling interval is shortened, a large amount of information will be transmitted from the farm working device, and when many farm working devices are in operation, an even larger amount of transmitted information will lead to increase in communication load on the server and in data accumulated in the server.

For example, Patent Document 1 discloses a technique for suppressing increase in communication load on a server and in data accumulated in the server by shortening a sampling interval in a case where a farm working device is operating in a field in comparison with a sampling interval in a case where the farm working device is not operate in the field.

### PRIOR ART DOCUMENT

### PATENT DOCUMENT

Patent Document 1: Japanese Patent No. 6924542

### SUMMARY OF INVENTION

### TECHNICAL PROBLEM

A farm working device is used to spend much time on work in a field. In addition, during a rice planting season and a harvesting season, many farm working devices will operate at the same time. In a case where, in addition to position information on the farm working devices, operation information that indicates detailed operating states of the farm working devices is transmitted from the farm working devices to a server, communication load on the server and data accumulated on the server will further increase. Therefore, it is difficult to suppress increase in communication load on the server and in data accumulated in the server only with the technique disclosed in Patent Document 1.

This present invention is made under the above-mentioned circumstances, and aims to suppress increase in communication load on the server and in data accumulated in the server.

### SOLUTION TO PROBLEM

A description will hereinafter be given of means for solving the problem with numbers and signs used in modes for carrying out the invention. These numbers and signs are added in parentheses as a reference to show an example of corresponding relations between the description of the scope of claims and the modes for carrying out the invention. Therefore, the scope of claims should not be construed as being limited to the descriptions with the parentheses.

An operation information management method according to an embodiment for solving the above-mentioned problem includes detecting for each user access frequency to farming use information that represents an index of work performed in a field by a working device (11) including a communication terminal (2) mounted on the working device (11) and deciding for each user a sampling interval to obtain operation information that indicates an operating state of the working device (11) in accordance with the access frequency.

An operation information management method according to an embodiment for solving the above-mentioned problem includes storing sampling intervals to obtain operation information that indicates an operating state of a working device (11) performing work in a field corresponding to a plurality of periods, determining, among the plurality of periods, a first period to which the present time belongs, and deciding a sampling interval on the basis of the determined first period.

An operation information management system (1) according to an embodiment for solving the above-mentioned problem comprises an access number detection unit (65) detecting for each user access frequency to farming use information that represents an index of work performed in a field by a working device (11) and a sampling interval decision unit (66) deciding for each user a sampling interval to obtain operation information that indicates an operating state of the working device (11) in accordance with the access frequency.

An operation information management system (1) according to an embodiment for solving the above-mentioned problem comprises a period determination unit (67) determining a first period to which the present time belongs among a plurality of periods and a sampling interval decision unit (66) deciding a sampling interval to obtain operation information that indicates an operating state of a working device (11) working in a field on the basis of the determined first period.

An operation information management program (611) for an embodiment for solving the above-mentioned problem causes a control device (60) to perform processing for detecting for each user access frequency corresponding to farming use information that represents an index of work performed in a field by a working device (11) and processing for deciding for each user a sampling interval to obtain operation information that indicates an operating state of the working device (11) in accordance with the access frequency.

An operation information management program (611) for an embodiment for solving the above-mentioned problem causes a control device (60) to perform processing for storing sampling intervals to obtain operation information that indicates an operating state of a working device (11) performing work in a field corresponding to a plurality of periods, processing for determining a first period to which the present time belongs among the plurality of periods and processing for deciding a sampling interval on the basis of the determined first period.

### ADVANTAGEOUS EFFECTS OF INVENTION

According to the above-mentioned embodiments, the operation information management system can suppress increase in communication load on the server and in data accumulated in the server.

### BRIEF DESCRIPTION OF DRAWINGS

FIG. 1 is a schematic diagram showing a configuration of an operation information management system in one embodiment.
FIG. 2 is a block diagram showing an electrical configuration of a working device in one embodiment.
FIG. 3 is a block diagram showing an electrical configuration of a management server in one embodiment.
FIG. 4 is a diagram illustrating decision of a sampling interval to obtain operation information on a working device in one embodiment.
FIG. 5 is a flowchart illustrating an operation of an operation information management system in one embodiment.
FIG. 6 is a flowchart illustrating an operation of an operation information management system in one embodiment.
FIG. 7 is a block diagram showing an electrical configuration of a management server in one embodiment.
FIG. 8 is a diagram illustrating decision of a sampling interval to obtain operation information on a working device in one embodiment.

### DESCRIPTION OF EMBODIMENTS

### (Embodiment 1)

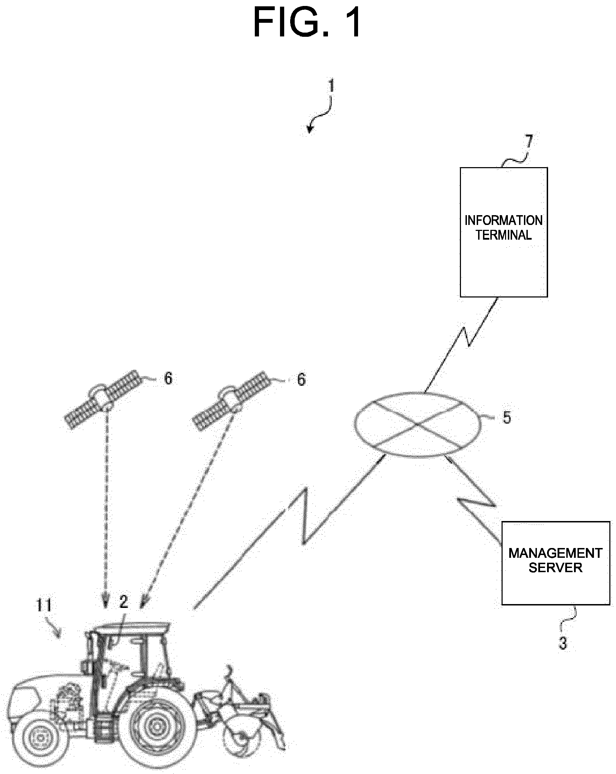

An operation information management system according to an embodiment will now be described below with reference to the accompanying drawings. As shown in FIG. 1, the operation information management system 1 includes a communication terminal 2 mounted on a working device 11 such as a tractor, a management server 3, and an information terminal 7. The communication terminal 2 and the information terminal 7 can communicate with a management server 3 via a network 5.

The working device 11 is owned by a user or operated under control of the user, and performs work, traveling in a field. The working device 11 includes, for example, a combine harvester, a rice planter, a tractor that tows a working machine, and a drone that sprays agricultural chemical. The communication terminal 2 obtains operation information that indicates a state of the working device 11 at a set sampling interval to transmit to the management server 3. The management server 3 generates farming use information on the basis of the received operation information. The farming use information is information used to manage whether agricultural production activities are being properly carried out from various aspects. The management server 3 distributes the generated farming use information to the information terminal 7. The user analyzes a method for cultivating crops in the field on the basis of the farming use information displayed on the information terminal 7.

Here, the sampling interval to obtain the operation information is decided by the management server 3, for example, in accordance with the frequency that the user accesses the management server 3 from the information terminal 7 to use the farming use information. The management server 3 decides the sampling interval, for example, so that the sampling interval corresponding to a user who uses farming use information more frequently is shorter than the sampling interval corresponding to a user who uses farming use information relatively less frequently. This enables the operation information management system 1 to obtain relatively detailed operation information for a user who uses farming use information more frequently as well as to reduce load on the management server 3.

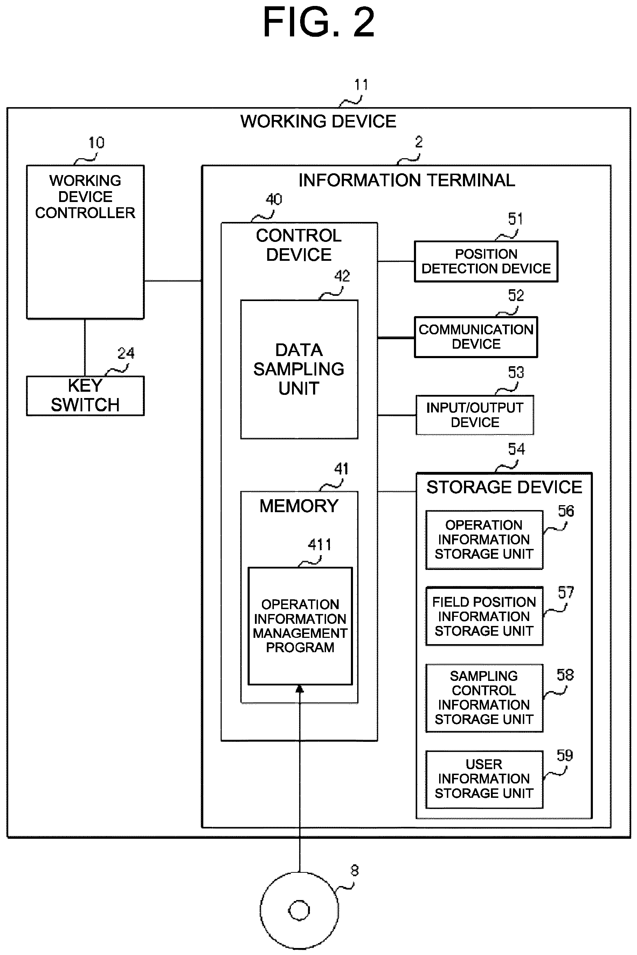

The working device 11, as shown in FIG. 2, includes a working device controller 10, a key switch 24, and a communication terminal 2. The key switch 24 turns on and off an engine of the working device 11. The key switch 24 transmits to the working device controller 10 electrical signals that indicate the on/off state of the engine of the working device 11.

The working device controller 10 obtains from various kinds of sensors state information that indicates a state of the working device 11. The state information obtained by the working device controller 10 includes information that indicates a state of the working device 11, for example, such as speed, steering angle, engine rotating speed, and on/off states of various kinds of clutches of the working device 11. In a case where the working device 11 is a vehicle that tows a working machine, for example, a tractor, the state information may include a PTO (power take-off) speed at the time of transmitting power to the working machine, a hitch height and a lift arm angle indicating a posture of the working machine. The obtained state information is output to the communication terminal 2.

The communication terminal 2 obtains operation information including state information and position information on the working device 11 and outputs the obtained operation information to the management server 3. The communication terminal 2 is fixed to a roof or the like of the working device 11. The communication terminal 2 comprises a control device 40, a position detection device 51, a communication device 52, an input/output device 53, and a storage device 54. The control device 40 is communicatively connected to the position detection device 51, the communication device 52, the input/output device 53, and the storage device 54.

The position detection device 51 measures a position of the working device 11. The position detection device 51 is a receiver of, for example, a GNSS (Global Navigation Satellite System) to measure the position of the working device 11 at each time of moving in a field by receiving radio waves from a positioning satellite 6 (refer to FIG. 1).

The storage device 54 is composed of a storage medium such as a non-volatile memory. The storage device 54 includes an operation information storage unit 56, a field position information storage unit 57, a sampling control information storage unit 58, and a user information storage unit 59, for example. The operation information storage unit 56 stores operation information obtained at each sampling interval. The field position information storage unit 57 stores field position information that indicates an area of the field. The sampling control information storage unit 58 stores sampling control information that indicates a sampling interval when obtaining operation information. The user information storage unit 59 stores individual information that identifies user's working device 11. The individual information on the working device 11 represents, for example, a vehicle number of the working device 11 and has been stored during manufacturing.

The control device 40 includes a computer provided with, for example, a CPU (Central Processing Unit) and a memory 41. The memory 41 stores various data for carrying out processing and functions as a non-transitory tangible storage medium that stores, for example, operation information management program 411. The operation information management program 411 may be provided as a computer program product that is recorded on a computer-readable storage medium 8 or may be provided as a computer program product that can be downloaded from a server. The control device 40 implements a data sampling unit 42 by executing the operation information management program 411.

The data sampling unit 42 obtains state information on the working device 11 from the working device controller 10 at a set sampling interval. In addition, the data sampling unit 42 obtains position information on the working device 11 from the position detection device 51 at a set sampling interval. The sampling interval at which the data sampling unit 42 obtains information is stored in the sampling control information storage unit 58. The sampling interval at which the data sampling unit 42 obtains state information from the working device controller 10 may be as long as the sampling interval at which the working device controller 10 obtains state information or may be longer than the sampling interval at which the working device controller 10 obtains state information.
The data sampling unit 42 associates operation information including the state information obtained from the working device controller 10 and the position information obtained from the position detection device 51 with the individual information on the working device 11, and transmits the operation information to the management server 3 via the communication device 52 and the network 5.

The communication device 52 transfers information that the control device 40 communicates with the management server 3 via the network 5. The communication device 52 transfers, for example, operation information obtained from the control device 40 to the management server 3. The communication device 52 includes, for example, a transmitter/receiver used in wireless communication such as a wireless LAN (Local Area Network) and a cellular network, and various interfaces such as a NIC (Network Interface Card) and a USB (Universal Serial Bus).

Information required for processing of the control device 40 is input into the input/output device 53. In addition, the input/output device 53 outputs a result of the processing of the control device 40. The input/output device 53 has, for example, operation buttons, a touch panel display, a speaker or the like.

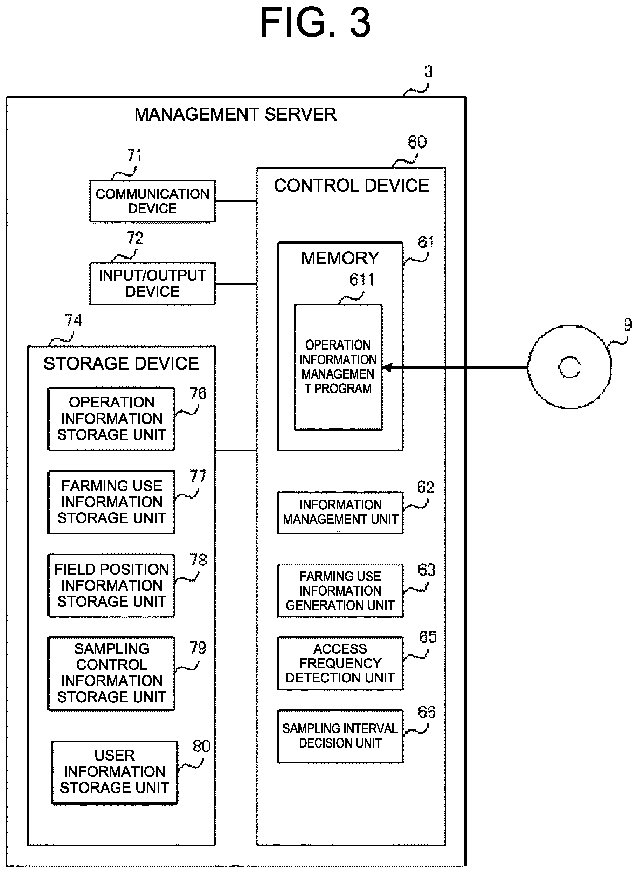

The management server 3 as shown in FIG. 1 includes a control device 60, a communication device 71, an input/output device 72 and a storage device 74, as shown in FIG. 3. The control device 60 is communicatively connected to the communication device 71, the input/output device 72, and the storage device 74. The communication device 71 transfers information that the control device 60 communicates with the communication terminal 2 and the information terminal 7 via the network 5. For example, the communication device 71 transfers operation information obtained from the communication terminal 2 to the control device 60. The communication device 71 includes, for example, various interfaces such as a NIC (Network Interface Card) and a USB (Universal Serial Bus).

The storage device 74 is composed of a storage medium such as a non-volatile memory. The storage device 74 includes an operation information storage unit 76, a farming use information storage unit 77, a field position information storage unit 78, a sampling control information storage unit 79, and a user information storage unit 80. The operation information storage unit 76 stores operation information received from the communication terminal 2. The farming use information storage unit 77 stores farming use information. The field position information storage unit 78 stores field position information that indicates an area of the field. The sampling control information storage unit 79 stores information on sampling interval in association with individual information on the working device 11. The user information storage unit 80 stores a user management table that associates the individual information on the working device 11 with user ID information that identifies a user who uses the working device 11. The user management table stored in the user information storage unit 80 is updated by a distributor, for example, when the working device 11 is sold.

The control device 60 includes, for example, a computer provided with a CPU and a memory 61. The memory 61 stores various data for carrying out processing and functions, for example, as a non-transitory tangible storage medium that stores operation information management program 611 of this system. The operation information management program 611 may be provided as a computer program product that is recorded on a computer-readable storage medium 9 or may be provided as a computer program product that can be downloaded from a server. The control device 60 implements an information management unit 62, a farming use information generation unit 63, an access number detection unit 65, and a sampling interval decision unit 66 by executing the operation information management program 611.

The information management unit 62 obtains user ID information associated with individual information on the working device 11 received from the communication terminal 2 on the basis of the user management table stored in the user information storage unit 80. The information management unit 62 associates the received operation information with the individual information on the working device 11 and the user ID information to store in the operation information storage unit 76.

The farming use information generation unit 63 generates farming use information, using the operation information. The farming use information generation unit 63 generates the farming use information for each user. In addition, the farming use information generation unit 63 generates the farming use information corresponding to work performed by the working device 11. The generated farming use information is information that indicates, for example, a movement track of the working device 11 in a field using position information contained in the operation information. By analyzing this information, a user can grasp how farm work has been performed in the field and refer to the information for generating work routes in the subsequent years.

In addition, the farming use information generation unit 63 may also generate farming use information that indicates work contents of the working device 11, for example, a yield amount of crops harvested by the working device 11. For example, the working device 11 (e.g., a combine harvester) is equipped with a yield sensor that measures a yield amount of the harvested crops. The control device 40 of the communication terminal 2 obtains the yield amount of the crops harvested by the working device 11 at each position indicated by the position information on the working device 11. The yield amount obtained at each position is included in the operation information and is transmitted to the farming use information generation unit 63. The farming use information generation unit 63 generates farming use information that indicates the yield amount at each position in the field on the basis of the operation information. A user can grasp, from this farming use information, a distribution of the yield amount in the field and consider an amount of fertilizer to be applied at each position in the field in the following year on the basis of farming use information.

The access number detection unit 65 detects the number of accesses (logins) from the information terminal 7 to the management server 3 within a predetermined period. A user accesses the farming use information storage unit 77 of the management server 3 using user ID information assigned to each user to utilize the information. The access number detection unit 65 counts for each user the number of times the management server 3 is accessed within a predetermined period, for example, one year. Then, the access number detection unit 65 detects for each user the number of accesses to the management server 3 for one year and calculates access frequency for each user.

The sampling interval decision unit 66 decides a sampling interval for each user in accordance with the access frequency. In detail, the sampling interval decision unit 66 decides shorter sampling intervals performed by the data sampling unit 42 of the working device 11 for users with the relatively high number of accesses to the management server 3 in comparison with users with the relatively low number of accesses.

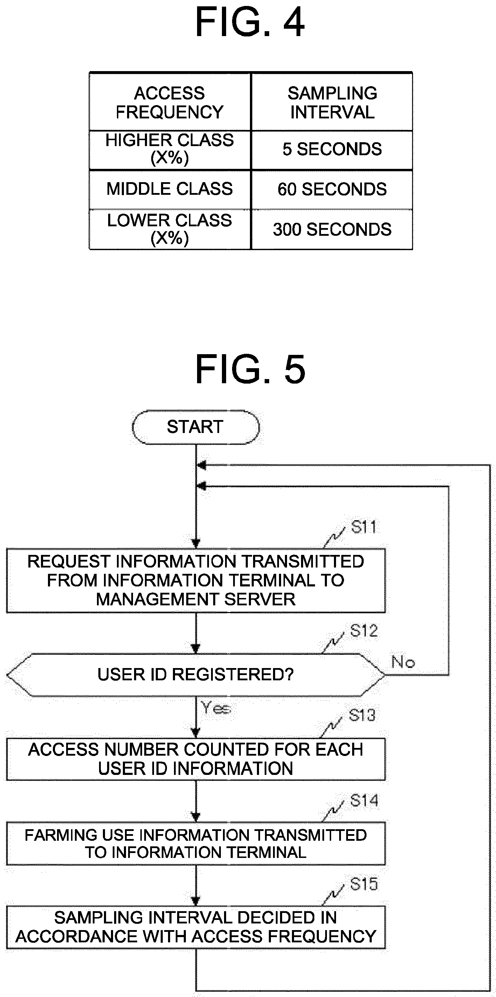

For example, the sampling interval decision unit 66 classifies users into a plurality of user groups on the basis of their access frequency and decides different sampling intervals for the classified user groups. Specifically, as shown in FIG. 4, the sampling interval decision unit 66 classifies users into an upper tier (a tier for higher access frequency), a middle tier, and a lower tier (a tier for lower access frequency) on the basis of the access frequency. The upper tier includes, for example, users within X% (e.g., 10%) from the highest access frequency.
The sampling interval decision unit 66 decides a sampling interval to be 5 seconds for users who belong to the upper tier. The lower tier includes, for example, users within Y% (e.g., 5%) from the lowest access frequency. The sampling interval decision unit 66 decides a sampling interval to be 300 seconds for users who belong to the lower tier. The middle tier is a tier that does not belong to the upper tier as well as the lower tier (users within more than or equal to X% from the highest access frequency and more than or equal to Y% from the lowest access frequency). The sampling interval decision unit 66 decides a sampling interval to be 60 seconds for users who belong to the middle tier. X and Y as a threshold value are variable.
Furthermore, in the embodiment shown in FIG. 4, the access frequency is set at three levels, and however, the access frequency may be set at several levels. For example, the access frequency may be set at two levels or five levels.

The sampling interval decision unit 66 stores information on the sampling interval decided for each user and the individual information on the working device 11 in the sampling control information storage unit 79 in association with each other.

Reverting to FIG. 3, information required for processing of the control device 60 is input into the input/output device 72. In addition, the input/output device 72 outputs results of the processing of the control device 60. The input/output device 72 has, for example, operation buttons, a touch panel display, a speaker or the like.

Reverting to FIG. 1, the information terminal 7 is a smartphone, a tablet terminal, a personal computer, or other like used by a user. The information terminal 7 stores application software for this system. A user can obtain user ID information, for example, by registering as a member. The user is allowed to access the management server 3 by entering his or her user ID information and password and is able to use (browsing) farming use information stored on the management server 3.

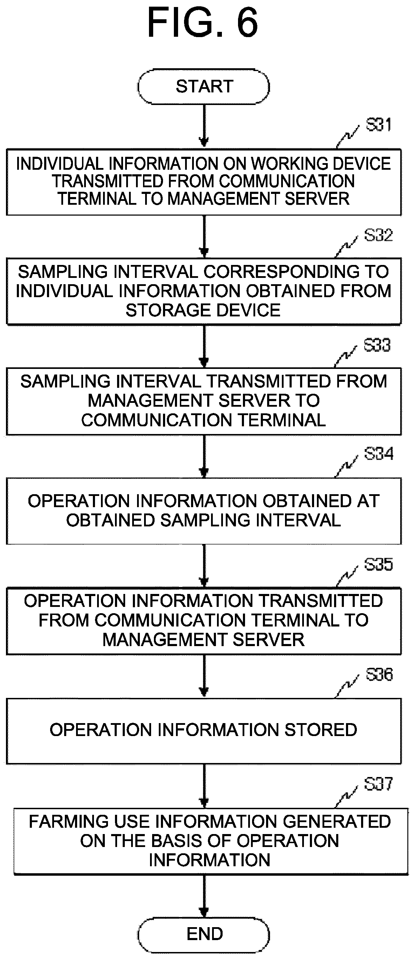

Next, with reference to FIG. 5 and FIG. 6, operations of the operation information management system 1 according to the embodiment will be described. First, with reference to FIG. 5, decision of a sampling interval in accordance with the access frequency will be described. Various farming use information is accumulated in the farming use information storage unit 77 in the storage device 74 of the management server 3.

In step S11, in a case where a user enters a browsing operation of farming use information into the information terminal 7, the information terminal 7 transmits to the management server 3 request information that requests for farming use information. For example, the user inputs a browsing operation into the information terminal 7 to browse the farming use information accumulated in the management server 3. The browsing operation includes an operation for inputting user ID information. The information terminal 7 transmits, to the management server 3, request information that requests for the farming use information, including the input user ID information.

In step S12, the farming use information generation unit 63 of the management server 3 determines whether the user ID information included in the received request information is registered. In a case where it is determined that the user ID information is registered (step S12: Yes), the processing moves to step S13. In a case where it is determined that the user ID information is not registered (step S12: No), the processing returns to step S11 and is repeated.

In step S13, the access number detection unit 65 counts for each user ID information the number of accesses to the farming use information. For example, in a case where the access number detection unit 65 determines that a predetermined measurement period (e.g., one year) has elapsed, it detects the number of having accessed the management server 3 (access frequency) during the predetermined measurement period.

In step S14, the farming use information generation unit 63 reads the farming use information from the farming use information storage unit 77 and transmits the read farming use information to the information terminal 7. The transmitted farming use information is displayed on the information terminal 7. The user analyzes a method for cultivating crops in the field on the basis of the farming use information displayed on the information terminal 7.

In step S15, the sampling interval decision unit 66 decides a sampling interval for each working device 11 on the basis of the number for each user of having accessed the management server 3 (access frequency) during a predetermined measurement period. For example, first, the sampling interval decision unit 66 decides the sampling interval for each user on the basis of the access frequency of each user during the measurement period. For example, the sampling interval decision unit 66 decides the sampling interval on the basis of a position of the access frequency for each user in a distribution of access frequency of all the users, for example, percentiles.

Specifically, on the basis of all the users' access frequency, the sampling interval decision unit 66 decides the position of the access frequency for each user in the distribution of the access frequency of all the users. The sampling interval decision unit 66 decides the sampling interval for a user on the basis of the position of the decided user access frequency. For example, as shown in FIG. 4, the sampling interval decision unit 66 decides the sampling interval to be 5 seconds for users who belong to the upper tier with higher access frequency. Furthermore, the sampling interval decision unit 66 decides the sampling interval to be 60 seconds for users who belong to the middle tier. In addition, the sampling interval decision unit 66 decides the sampling interval to be 300 seconds for users who belong to the lower tier with lower access frequency. Thus, the sampling interval decision unit 66 decides sampling intervals for users with the relatively high number of accesses to become smaller than or equal to sampling intervals for users with the relatively low number of accesses.

Next, on the basis of the user management table stored in the user information storage unit 80, the sampling interval decision unit 66 decides individual information on the working device 11 used by a user who has accessed the management server 3. The sampling interval decision unit 66 searches from the user management table the individual information on the working device 11 associated with the user ID information corresponding to the user.

The sampling interval decision unit 66 associates the decided sampling interval with the searched individual information on the working device 11 to store in the sampling control information storage unit 79. In a case where the corresponding sampling interval has already been stored, the sampling interval decision unit 66 replaces the sampling interval with a newly decided sampling interval.

The processing in steps S11 through S15 is repeatedly performed.

Next, with reference to FIG. 6, obtainment of operation information on the working device 11 will be described.
The sampling control information storage unit 79 in the storage device 74 of the management server 3 stores information on a sampling interval for each individual information on the working device 11. It is assumed that the working device 11 is a combine harvester. The user information storage unit 59 of the communication terminal 2 stores individual information which identifies the combine harvester (working device 11). When a user activates the working device 11, the communication terminal 2 is activated and starts processing shown in FIG. 6.

In step S31, the data sampling unit 42 of the control device 40 of the communication terminal 2 transmits the individual information on the working device 11 to the management server 3. For example, the data sampling unit 42 reads out the individual information on the working device 11 (combine harvester) from the user information storage unit 59 and transmits the readout individual information to the management server 3 via the communication device 52 and the network 5.

In step S32, the information management unit 62 of the control device 60 of the management server 3 obtains information on the sampling interval associated with the individual information on the working device 11 (combine harvester) from the sampling control information storage unit 79.

In step S33, the information management unit 62 transmits the sampling interval information via the network 5 to the communication terminal 2. In addition, the information management unit 62 transmits via the network 5 to the communication terminal 2 field position information that indicates an area of the field stored in the field position information storage unit 78. The sampling interval information is stored in the sampling control information storage unit 58 by the data sampling unit 42 of the control device 40 of the communication terminal 2. Furthermore, the field position information is stored in the field position information storage unit 57 by the data sampling unit 42.

In step S34, the data sampling unit 42 obtains the position information from the position detection device 51 at the obtained sampling interval and obtains state information from the working device controller 10. The data sampling unit 42 accumulates as operation information the state information and the position information obtained at each sampling interval in the operation information storage unit 56.

In step S35, the data sampling unit 42 transmits to the management server 3 the accumulated operation information and the individual information on the working device 11 in association with each other. For example, in a case where the key switch 24 of the working device 11 is turned off, the data sampling unit 42 transmits the operation information and the individual information to the management server 3.

In step S36, the information management unit 62 of the management server 3 stores the received operation information in the operation information storage unit 76. For example, on the basis of the user management table stored in the user information storage unit 80, the information management unit 62 obtains the user ID information associated with the individual information on the working device 11 received from the communication terminal 2. The information management unit 62 associates the received operation information with the individual information on the working device 11 and the user ID information to store in the operation information storage unit 76.

In step S37, the farming use information generation unit 63 generates farming use information on the basis of the operation information stored in the operation information storage unit 76 to store in the farming use information storage unit 77. The farming use information generation unit 63 generates the farming use information used to analyze work performed in a field by the working device 11, for example, for each user ID information and each working device 11 (work performed by the working device 11). For example, the farming use information generation unit 63 generates as the farming use information a yield map that indicates a yield amount at each harvesting position in a field from position information included in the operation information and yield data that indicates yield amount obtained at each position. A user can grasp a distribution of the yield amount in the field from this yield map and can consider the amount of basal fertilizer to be applied at each position in the following year.

It should be noted that the above-mentioned description has been given of a case in which the control device 40 with the data sampling unit 42 is implemented in the communication terminal 2, and, however, the control device 40 may be a device physically separate from the communication terminal 2. For example, while the communication terminal 2 may be equipped with the position detection device 51 and the communication device 52, the control device 40 and the storage device 54 may be implemented in a computer separate from the communication terminal 2.

In addition, the above-mentioned description has been given of a case where the control device 40 and the storage device 54 are separate devices, and the control device 60 and the storage device 74 are separate devices. However, the control device 40 and the storage device 54 may be implemented in one computer. Furthermore, the control device 60 and the storage device 74 may be implemented in one computer.

Additionally, while the above-mentioned description has been given of a case in which the management server 3 has the farming use information generation unit 63 and the farming use information storage unit 77, the farming use information generation unit 63, the farming use information storage unit 77, the access number detection unit 65, and the sampling interval decision unit 66 may be implemented in a physically separate server. For example, the farming use information generation unit 63 may be implemented on a server A different from the management server 3. A user may prepare farming use information in a server A different from the management server 3 by accessing the management server 3 to download operation information stored in the farming use information storage unit 77.

Further, the farming use information storage unit 77 which stores farming use information generated by the farming use information generation unit 63, the access number detection unit 65, and the sampling interval decision unit 66 may be implemented in a server B different from the management server 3. The obtained operation information may also be stored in this server B. The access number detection unit 65 detects for each user the number of having accessed the server B (access frequency). The sampling interval decision unit 66 decides a sampling interval for each user on the basis of access frequency to the server B. The sampling interval information decided for each user is transferred from the server B to the sampling control information storage unit 79 of the management server 3.

In addition, the above-mentioned description with FIG. 4 has been given of a case in which the access frequency of users is classified into the upper tier (more than or equal to X% from the top), the middle tier, and the lower tier (less than or equal to Y% from the bottom) to decide a sampling interval for each tier. However, decision of the sampling interval may be decided in an optional method on the basis of the access frequency. For example, the sampling interval decision unit 66 of the management server 3 may decide a sampling interval by comparing an access number indicating access frequency, with a threshold value. For example, the sampling interval decision unit 66 may decide, for example, for one year, the sampling interval to be 5 seconds due to the access frequency of a user with the number of having accessed being 100 times or more, the sampling interval to be 60 seconds due to the access frequency of a user with the number of having accessed being 30 times or more and less than 100 times, and the sampling interval to be 300 seconds due to the access frequency of a user with the number of having accessed being less than 30 times.

In addition, the above-mentioned description has been given of a case in which the data sampling unit 42 of the communication terminal 2 transmits to the management server 3 the operation information and the individual information on the working device 11 in association with each other, and the management server 3 associates the operation information with the user ID information. As another embodiment, the data sampling unit 42 of the communication terminal 2 may associate the operation information with the individual information on the working device 11 and the user ID information to transmit to the management server 3.

Furthermore, the above-mentioned description with the flow chart of FIG. 5 has been given of a case in which the sampling interval decision unit 66 determines whether or not a predetermined measurement period (e.g., one year) has elapsed since the sampling interval decision unit 66 started counting the number of accesses and decides for each user a sampling interval according to the number of accesses to the management server 3 (access frequency) in a case where the predetermined measurement period has elapsed. As another embodiment, the sampling interval decision unit 66 may determine whether or not a specified date and time (e.g., midnight on April 1) rather than a predetermined measurement period has passed and decide a sampling interval according to the access frequency of each user during a predetermined measurement period (e.g., one year) when the specified date and time comes.

Additionally, the above-mentioned description with the flow chart of FIG. 6 has been given of a case in which the data sampling unit 42 of the communication terminal 2 obtains sampling intervals when a user activates the communication terminal 2. As another embodiment, the timing at which the data sampling unit 42 obtains sampling intervals may be set to be, for example, once a year, a timing at which the operation information management program 411 is updated, or the like.

Further, the above-mentioned description has been given of a case in which the data sampling unit 42 of the control device 40 transmits to the management server 3 the obtained operation information and the individual information on the working device 11 in association with each other at a timing of turning off the key switch 24 of the working device 11. However, the timing for transmitting the operation information to the management server 3 may be an optional timing. For example, every time one piece of operation information is obtained, the operation information may be transmitted, or every time a predetermined amount of the operation information is accumulated, it may be transmitted, or every time a predetermined time such as every 10 minutes has elapsed, it may be transmitted.

In addition, the above-mentioned description has been given of a case in which the information on the sampling interval and the field position information are obtained from the management server 3 via the network 5. As another embodiment, the information on the sampling interval and the field position information may be obtained from a USB interface or the like included in the communication device 52 of the communication terminal 2 via a storage medium such as USB. The information on the sampling interval may also be included within the operation information management program 411 and be stored in the storage device 54 by installing the operation information management program 411. In this case, a value of the sampling interval is set as a parameter in the operation information management program 411, and the value of the sampling interval is set for each user in accordance with the access frequency of a user to the management server 3.

In addition, the above-mentioned description has been given of a case in which the farming use information generation unit 63 of the management server 3 generates farming use information at a timing of receiving the operation information of the working device 11 as shown in FIG. 6, which is, however, not limited. The farming use information generation unit 63 may generate farming use information at an optional timing. For example, the farming use information generation unit 63 may generate farming use information at a predetermined time, for example, 2 AM every day.

In addition, the above-mentioned description has been given of a case in which a user accesses the farming use information storage unit 77 of the management server 3 via the information terminal 7 to use the farming use information. Furthermore, a user may be able to access the operation information storage unit 76 of the management server 3 to use the operation information.

In addition, the above-mentioned description has been given of a case in which the sampling interval is set uniformly regardless of whether the working device 11 is located in a field or not, or whether it is moving or not. As another embodiment, the sampling interval may be changed depending on whether the working device 11 is located in a field or not, or whether it is moving or not. Furthermore, the sampling interval may be set on the basis of access frequency only in a case where the working device 11 is operating in a field.

In addition, the above-mentioned description has been given of a case in which the operation information includes the state information obtained from various kinds of sensors of the working device controller 10 and the position information obtained by the position detection device 51. As another embodiment, the operation information may include only state information obtained from various kinds of sensors of the working device controller 10 or may include only the position information obtained by the position detection device 51.

As described above, the operation information management system 1 according to embodiment 1 detects for each user access frequency to farming use information that represents an index of work performed in a field by the working device 11 and decides for each user a sampling interval to obtain operation information that indicates an operating state of the working device 11 in accordance with the access frequency. This enables the operation information management system 1 to obtain the operation information at a sampling interval in accordance with the access frequency to the farming use information as well as to reduce communication load on the management server 3 and suppress increase in data accumulated in the management server 3.

For example, the operation information management system 1 according to embodiment 1 includes an access number detection unit 65 that detects the number of accesses from the information terminal 7 to the management server 3 within a past predetermined period and a sampling interval decision unit 66 that decides shorter sampling intervals performed by the data sampling unit 42 of the working device 11 for a user with the relatively high number of accesses to the management server 3 in comparison with a user with the relatively low number of accesses. The operation information management system 1 according to embodiment 1 decides a sampling interval given to a user who uses farming use information more frequently to be shorter than a sampling interval given to a user who uses farming use information relatively less frequently. This enables the operation information management system 1 to obtain relatively detailed operation information for a user who uses the farming use information more frequently as well as to reduce communication load on the management server 3 and suppress increase in data accumulated in the management server 3.

Detailed farming use information can be generated by shortening a sampling interval to obtain detailed operation information. Obtaining detailed operation information will lead to communication load on the management server 3 and increase in data accumulated in the management server 3. However, even though detailed operation information is accumulated on the management server 3, there is a low possibility that a user with low access frequency uses this operation information. In addition, even though detailed farm information is generated for a user with low access frequency to the farming use information, there is a low possibility that the generated farming use information would be used. By changing a sampling interval in accordance with access frequency of a user to the management server 3, the operation information management system 1 according to the embodiment makes it possible to provide detailed farming use information to a user with high access frequency as well as to suppress communication load on the management server 3 and increase in data accumulated in the management server 3.

Furthermore, the operation information management system 1 according to the embodiment can generate farming use information for each user by storing the obtained operation information and user ID information that identifies a user in association with each other.

Additionally, the operation information management system 1 according to the embodiment can generate farming use information corresponding to work performed by the working device 11 by storing the obtained operation information and information that identifies the working device 11 in association with each other.

### (Embodiment 2)

In embodiment 2, the data sampling unit 42 of the communication terminal 2 obtains operation information at different sampling intervals for a first period of high use frequency of the working device 11 and for a second period of low use frequency of the working device 11. For example, a sampling interval for the first period is decided to be shorter than a sampling interval for the second period. This enable load on the management server 3 to be reduced. The working device 11 includes, for example, a rice planter, a cultivator, and a combine harvester that perform a specific type of work (e.g., rice planting, cultivating, harvesting, or the like) in a field. The configuration of the working device 11 is the same as embodiment 1, and therefore, the description is omitted.

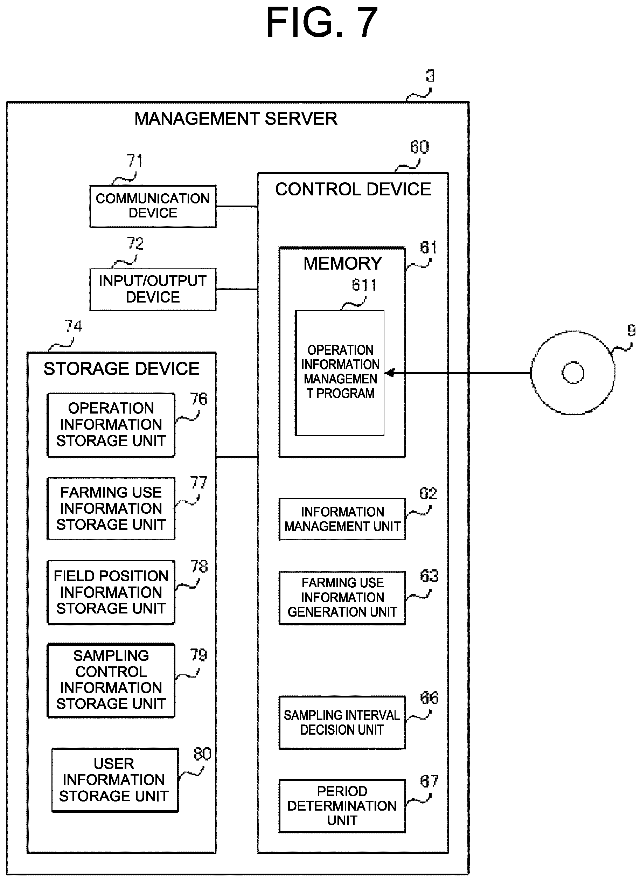

FIG. 7 is a block diagram illustrating an electrical configuration of the management server 3 according to embodiment 2. The access number detection unit 65 in the configuration of the management server 3 according to embodiment 1 shown in FIG. 3 has been deleted, and a period determination unit 67 is added. The descriptions other than in the sampling control information storage unit 79, the sampling interval decision unit 66, and the period determination unit 67 are the same as the descriptions in embodiment 1.

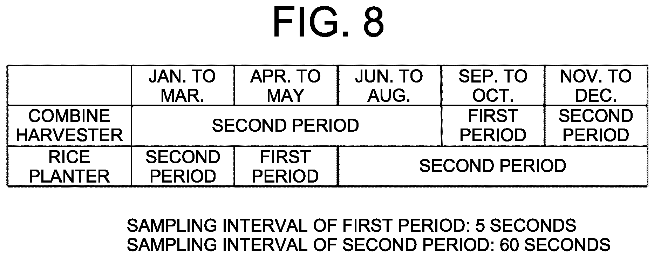

In addition to information on a sampling interval, the sampling control information storage unit 79 stores information on a period corresponding to the type of work performed by the working device 11. Specifically, in the sampling control information storage unit 79, the first and second periods are registered as shown in FIG. 8 in accordance with groups classified by the types of working device 11, for example, the types of the work performed by the working device 11. The first period is a period of relatively high use frequency of the working device 11 of that type. The first period is a period during which one can expect to obtain operation information useful for generating detailed farming use information. The second period is a period of relatively low use frequency of the working device 11 of that type. The second period is a period during which one cannot expect to obtain operation information useful for generating detailed farming use information. For example, as shown in FIG. 8, in a case of a combine harvester, a type of working device 11 that performs harvesting, September and October correspond to the first period and the other months correspond to the second period. In addition, in a case of a rice planter, the type of working device 11 that performs rice planting, April and May correspond to the first period and the other months correspond to the second period.

The period determination unit 67 determines which of the first period or the second period the present time belongs to on the basis of the work performed by the working device 11. For example, in a case where the working device 11 is a combine harvester and the present time is September, the period determination unit 67 determines that the present time belongs to the first period on the basis of information stored in the sampling control information storage unit 79, as shown in FIG. 8. Furthermore, in a case where the working device 11 is a rice planter and the present time is September, the period determination unit 67 determines that the present time belongs to the second period.

When deciding a sampling interval, the sampling interval decision unit 66 decides the sampling interval corresponding to the first period as a sampling interval in a case where it is determined that the present time belongs to the first period and decides the sampling interval corresponding to the second period as a sampling interval in a case where it is determined that the present time belongs to the second period. For example, the sampling interval corresponding to the first period indicates 5 seconds, and the sampling interval corresponding to the second period indicates 60 seconds.

The information management unit 62 transmits to the communication terminal 2 information which indicates the decided sampling interval.
The data sampling unit 42 of the working device 11 obtains operation information on the basis of the obtained sampling interval.

In embodiment 2, the sampling interval decision unit 66 does not perform stratification in accordance with access frequency of a user as shown in FIG. 4 and, however, provides a first period and a second period to all the users uniformly as shown in FIG. 8 to decide a first sampling interval corresponding to the first period and a second sampling interval corresponding to the second period.

It should be noted that the above-mentioned description has been given of a case in which the period determination unit 67 determines which of the two periods the present time belongs to, and, however, there may be three periods or more to which the present time belongs. The period determination unit 67 may determine a period to which the present time belongs among a plurality of periods. For example, the period determination unit 67 may determine a period to which the present time belongs among a first period, a second period, and a third period. For example, the use frequency of the type of working device 11 corresponding to the first period is higher than the use frequency corresponding to the second period, and the use frequency corresponding to the second period is higher than the use frequency corresponding to the third period.

As described above, the operation information management system 1 according to embodiment 2 comprises a period determination unit 67 that determines which of a first period or a second period the present time belongs to and a sampling interval decision unit 66 that decides a first sampling period as a sampling interval to obtain operation information that indicates an operating state of the working device 11 during the first period in a case where the period determination unit 67 has determined that the present time belongs to the first period and that decides that a second sampling period as a sampling interval during the second period in a case where the period determination unit 67 has determined that the present time belongs to the second period. By making the sampling interval of the first period during which one can expect to obtain operation information useful for generating detailed farming use information shorter than the sampling interval of the second period, which is the other one, the operation information management system 1 according to embodiment 2 can obtain detailed operation information for the period during which useful farming use information can be obtained, thereby improving user satisfaction. On the other hand, the operation information management system 1 according to embodiment 2 can reduce transmission of the operation information during the period when useful farming use information cannot be obtained, thereby suppressing communication load on the management server 3 and increase in data accumulated in the management server 3.

### (Embodiment 3)

In addition to the configuration shown in FIG. 7, the operation information management system 1 according to embodiment 3 has an access number detection unit 65 shown in FIG. 3. The access number detection unit 65 detects access frequency for each user to the management server 3. The period determination unit 67 determines which of a first period or a second period the present time belongs to shown in FIG. 8. The sampling interval decision unit 66 performs stratification in accordance with access frequency of a user as shown in FIG. 4 and decides a sampling interval in accordance with the stratification. In addition, in a case where it is determined that the present time belongs to the first period for a user who belongs to an upper tier shown in FIG. 4, the sampling interval decision unit 66 decides the first sampling period as a sampling interval. Furthermore, in a case where it is determined that the present time belongs to the second period, the sampling interval decision unit 66 decides the second sampling period as a sampling interval. That is to say, the sampling interval decision unit 66 changes the sampling interval of 5 seconds decided for the user of the upper tier shown in FIG. 4 to 5 seconds or 60 seconds, depending on the period as shown in FIG. 8.

The embodiments that have been described above are examples, and configurations described in each embodiment may therefore be arbitrarily changed and/or arbitrarily combined to an extent that does not interfere with functions. Additionally, some of the functions described in the embodiments may be omitted if the required functions can be achieved.

### REFERENCE SIGNS LIST

1 operation information management system
2 communication terminal
3 management server
5 network
6 positioning satellite
7 information terminal
8,9 storage medium
10 working device controller
11 working device
24 key switch
40 control device
41 memory
411 operation information management program
42 data sampling unit
51 position detection device
52 communication device
53 input/output device
54 storage device
56 operation information storage unit
57 field position information storage unit
58 sampling control information storage unit
59 user information storage unit
60 control device
61 memory
611 operation information management program
62 information management unit
63 farming use information generation unit
65 access number detection unit
66 sampling interval decision unit
67 period determination unit
71 communication device
72 input/output device
74 storage device
76 operation information storage unit
77 farming use information storage unit
78 field position information storage unit
79 sampling control information storage unit
80 user information storage unit

## Claims

1. An operation information management method, the method comprising:
detecting for each user access frequency corresponding to farming use information that represents an index of work performed in a field by a working device (11) including a communication terminal (2) mounted on the working device (11); and
deciding for each user a sampling interval to obtain operation information that indicates an operating state of the working device (11) in accordance with the access frequency, **characterized in that**
a working device controller (10) obtains from various kinds of sensors state information that indicates a state of the working device (11);
the communication terminal (2) obtains operation information including state information and position information on the working device (11) and outputs the obtained operation information to a management server (3); and the method comprises steps of:
transmitting individual information on the working device (11) to the management server (3);
obtaining information on the sampling interval associated with the individual information on the working device (11) from a sampling control information storage unit (79) of the management server (3);
transmitting the sampling interval information via a network (5) to the communication terminal (2);
obtaining the position information from a position detection device (51) in the working device (11) at the obtained sampling interval and obtaining state information from a working device controller (10) in the working device (11) wherein an information terminal (7) accumulates as operation information the state information and the position information obtained at each sampling interval in a storage unit (56) of the information terminal (7);
transmitting the accumulated operation information and the individual information on the working device (11) in association with each other to the management server (3);
storing the received operation information in an operation information storage unit (76) of the management server (3) by an information management unit (62) of the management server (3); and
generating farming use information on the basis of the operation information stored in the operation information storage unit (76) to store in a farming use information storage unit (77) of the management server by a farming use information generation unit of the management server (3).

2. The operation information management method according to claim 1, wherein
deciding the sampling interval for each user comprises:
deciding a position of the access frequency of a corresponding user in a distribution of the access frequency; and
deciding the sampling interval on the basis of the decided position of the access frequency.

3. The operation information management method according to claim 1 or claim 2, wherein
deciding the sampling interval for each user comprises deciding the sampling interval by comparing an access number indicating access frequency, with a threshold value.

4. The operation information management method according to any one of claims 1 to 3, wherein
the sampling interval for a user with relatively high access frequency is smaller than or equal to the sampling interval for a user with relatively low access frequency.

5. The operation information management method according to any one of claims 1 to 4, the method comprising:
storing the operation information and user ID information that identifies a user in association with each other; and
generating the farming use information for each user on the basis of the operation information in association with the user ID information.

6. The operation information management method according to any one of claims 1 to 5, the method comprising:
storing the sampling interval corresponding to a plurality of periods;
determining a first period to which the present time belongs among the plurality of periods; and
deciding the sampling interval on the basis of the determined first period.

7. The operation information management method according to any one of claims 1 to 6, the method comprising:
storing a sampling interval to obtain operation information that indicates an operating state of a working device (11) performing work in a field corresponding to a plurality of periods;
determining a first period to which the present time belongs among the plurality of periods; and
deciding the sampling interval on the basis of the determined first period.

8. The operation information management method according to claim 7, wherein
the plurality of periods includes a second period,
the first period is a period which has higher use frequency of the working device (11) than the second period, and
a first sampling interval set in a case where the present time belongs to the first period is shorter than a second sampling interval set in a case where the present time belongs to the second period.

9. An operation information management system (1) comprising:
an access number detection unit (65) detecting for each user access frequency corresponding to farming use information that represents an index of work performed in a field by a working device (11) including a communication terminal (2) mounted on a working device (11); and
a sampling interval decision unit (66) deciding for each user a sampling interval to obtain operation information that indicates an operating state of the working device (11) in accordance with the access frequency, **characterized in that**
a working device controller (10) is configured to obtain from various kinds of sensors state information that indicates a state of the working device (11);
the communication terminal (2) is configured to obtain operation information including state information and position information on the working device (11) and to output the obtained operation information to a management server (3); and the operation information management system (1) is configured to execute:
transmitting individual information on the working device (11) to the management server (3);
obtaining information on the sampling interval associated with the individual information on the working device (11) from a sampling control information storage unit (79) of the management server (3);
transmitting the sampling interval information via a network (5) to the communication terminal (2);
obtaining the position information from a position detection device (51) in the working device (11) at the obtained sampling interval and obtaining state information from a working device controller (10) in the working device (11) wherein an information terminal (7) accumulates as operation information the state information and the position information obtained at each sampling interval in a storage unit (56) of the information terminal (7);
transmitting the accumulated operation information and the individual information on the working device (11) in association with each other to the management server (3);
storing the received operation information in an operation information storage unit (76) of the management server (3) by an information management unit (62) of the management server (3); and
generating farming use information on the basis of the operation information stored in the operation information storage unit (76) to store in a farming use information storage unit (77) of the management server by a farming use information generation unit of the management server (3).

10. An operation information management program to cause a control device (40) to execute processing comprising:
detecting for each user access frequency corresponding to farming use information that represents an index of work performed in a field by a working device (11) including a communication terminal (2) mounted on a working device (11); and
deciding for each user a sampling interval to obtain operation information that indicates an operating state of the working device in accordance with the access frequency, **characterized in that**
a working device controller (10) is configured to obtain from various kinds of sensors state information that indicates a state of the working device (11);
the communication terminal (2) is configured to obtain operation information including state information and position information on the working device (11) and to output the obtained operation information to a management server (3); and the operation information management program is configured to execute:
transmitting individual information on the working device (11) to the management server (3);
obtaining information on the sampling interval associated with the individual information on the working device (11) from a sampling control information storage unit (79) of the management server (3);
transmitting the sampling interval information via a network (5) to the communication terminal (2);
obtaining the position information from a position detection device (51) in the working device (11) at the obtained sampling interval and obtaining state information from a working device controller (10) in the working device (11) wherein an information terminal (7) accumulates as operation information the state information and the position information obtained at each sampling interval in a storage unit (56) of the information terminal (7);
transmitting the accumulated operation information and the individual information on the working device (11) in association with each other to the management server (3);
storing the received operation information in an operation information storage unit (76) of the management server (3) by an information management unit (62) of the management server (3); and
generating farming use information on the basis of the operation information stored in the operation information storage unit (76) to store in a farming use information storage unit (77) of the management server by a farming use information generation unit of the management server (3).

## Patentansprüche

1. Betriebsinformationsmanagementverfahren, das Verfahren umfassend:
Erkennen, für jeden Benutzer, einer Zugriffsfrequenz entsprechend Landwirtschaftsnutzungsinformationen, die einen Index von Arbeit darstellen, die von einer Arbeitsvorrichtung (11), die ein an der Arbeitsvorrichtung (11) montiertes Kommunikationsterminal (2) beinhaltet, auf einem Feld durchgeführt wird; und
Festlegen, für jeden Benutzer, eines Abtastintervalls, um Betriebsinformationen zu erhalten, die einen Betriebszustand der Arbeitsvorrichtung (11) gemäß der Zugriffsfrequenz angeben, **gekennzeichnet dadurch, dass**
eine Arbeitsvorrichtungssteuerung (10) von verschiedenen Arten von Sensoren Zustandsinformationen erhält, die einen Zustand der Arbeitsvorrichtung (11) angeben;
das Kommunikationsterminal (2) Betriebsinformationen erhält, die Zustandsinformationen und Positionsinformationen über die Arbeitsvorrichtung (11) beinhalten, und die erhaltenen Betriebsinformationen an einen Managementserver (3) ausgibt; und das Verfahren die folgenden Schritte umfasst:
Senden von individuellen Informationen über die Arbeitsvorrichtung (11) an den Managementserver (3);
Erhalten von Informationen über das Abtastintervall, das den individuellen Informationen über die Arbeitsvorrichtung (11) zugeordnet ist, von einer Abtaststeuerungsinformationsspeichereinheit (79) des Managementservers (3);
Senden der Abtastintervallinformationen über ein Netzwerk (5) an das Kommunikationsterminal (2);
Erhalten der Positionsinformationen von einer Positionserkennungsvorrichtung (51) in der Arbeitsvorrichtung (11) in dem erhaltenen Abtastintervall und Erhalten von Zustandsinformationen von einer Arbeitsvorrichtungssteuerung (10) in der Arbeitsvorrichtung (11), wobei ein Informationsterminal (7) die Zustandsinformationen und die Positionsinformationen, die in jedem Abtastintervall erhalten werden, als Betriebsinformationen in einer Speichereinheit (56) des Informationsterminals (7) sammelt;
Senden der gesammelten Betriebsinformationen und der individuellen Informationen über die Arbeitsvorrichtung (11) in Zuordnung zueinander an den Managementserver (3);
Speichern der empfangenen Betriebsinformationen in einer Betriebsinformationsspeichereinheit (76) des Managementservers (3) durch eine Informationsmanagementeinheit (62) des Managementservers (3); und
Erzeugen, durch eine Landwirtschaftsnutzungsinformationserzeugungseinheit des Managementservers (3), von Landwirtschaftsnutzungsinformationen auf der Basis der in der Betriebsinformationsspeichereinheit (76) gespeicherten Betriebsinformationen, um sie in einer Landwirtschaftsnutzungsinformationsspeichereinheit (77) des Managementservers zu speichern.

2. Betriebsinformationsmanagementverfahren nach Anspruch 1, wobei
das Festlegen des Abtastintervalls für jeden Benutzer Folgendes umfasst:
Festlegen einer Position der Zugriffsfrequenz eines entsprechenden Benutzers in einer Verteilung der Zugriffsfrequenz; und
Festlegen der Zugriffsfrequenz auf der Basis der festgelegten Position der Zugriffsfrequenz.

3. Betriebsinformationsmanagementverfahren nach Anspruch 1 oder Anspruch 2, wobei
das Festlegen des Abtastintervalls für jeden Benutzer das Festlegen des Abtastintervalls durch Vergleichen einer Zugriffsnummer, die eine Zugriffsfrequenz angibt, mit einem Schwellenwert umfasst.

4. Betriebsinformationsmanagementverfahren nach einem der Ansprüche 1 bis 3, wobei
das Abtastintervall für einen Benutzer mit einer relativ hohen Zugriffsfrequenz kleiner als oder gleich dem Abtastintervall für einen Benutzer mit einer relativ niedrigen Zugriffsfrequenz ist.

5. Betriebsinformationsmanagementverfahren nach einem der Ansprüche 1 bis 4, das Verfahren umfassend:
Speichern der Betriebsinformationen und Benutzer-ID-Informationen, die einen Benutzer in Zuordnung zueinander identifizieren; und
Erzeugen der Landwirtschaftsnutzungsinformationen für jeden Benutzer auf der Basis der Betriebsinformationen in Zuordnung zu den Benutzer-ID-Informationen.

6. Betriebsinformationsmanagementverfahren nach einem der Ansprüche 1 bis 5, das Verfahren umfassend:
Speichern des Abtastintervalls entsprechend einer Vielzahl von Zeiträumen;
Bestimmen eines ersten Zeitraums, zu dem die gegenwärtige Zeit gehört, aus der Vielzahl von Zeiträumen; und
Festlegen des Abtastintervalls auf der Basis des bestimmten ersten Zeitraums.

7. Betriebsinformationsmanagementverfahren nach einem der Ansprüche 1 bis 6, das Verfahren umfassend:
Speichern eines Abtastintervalls, um Betriebsinformationen zu erhalten, die einen Betriebszustand einer Arbeitsvorrichtung (11) angeben, die Arbeit auf einem Feld durchführt, entsprechend einer Vielzahl von Zeiträumen;
Bestimmen eines ersten Zeitraums, zu dem die gegenwärtige Zeit gehört, aus der Vielzahl von Zeiträumen; und
Festlegen des Abtastintervalls auf der Basis des bestimmten ersten Zeitraums.

8. Betriebsinformationsmanagementverfahren nach Anspruch 7, wobei
die Vielzahl von Zeiträumen einen zweiten Zeitraum beinhaltet,
der erste Zeitraum ein Zeitraum ist, der eine höhere Nutzungsfrequenz der Arbeitsvorrichtung (11) aufweist als der zweite Zeitraum, und
ein erstes Abtastintervall, das in einem Fall festgesetzt ist, wo die gegenwärtige Zeit zu dem ersten Zeitraum gehört, kürzer ist als ein zweites Abtastintervall, das in einem Fall festgesetzt ist, wo die gegenwärtige Zeit zu dem zweiten Zeitraum gehört.

9. Betriebsinformationsmanagementsystem (1), umfassend:
eine Zugriffsnummererkennungseinheit (65), die für jeden Benutzer eine Zugriffsfrequenz entsprechend Landwirtschaftsnutzungsinformationen erkennt, die einen Index von Arbeit darstellen, die von einer Arbeitsvorrichtung (11), die ein an der Arbeitsvorrichtung (11) montiertes Kommunikationsterminal (2) beinhaltet, auf einem Feld durchgeführt wird; und
eine Abtastintervallfestlegungseinheit (66), die für jeden Benutzer ein Abtastintervall festlegt, um Betriebsinformationen zu erhalten, die einen Betriebszustand der Arbeitsvorrichtung (11) gemäß der Zugriffsfrequenz angeben, **gekennzeichnet dadurch, dass**
eine Arbeitsvorrichtungssteuerung (10) dazu konfiguriert ist, von verschiedenen Arten von Sensoren Zustandsinformationen zu erhalten, die einen Zustand der Arbeitsvorrichtung (11) angeben;
das Kommunikationsterminal (2) dazu konfiguriert ist, Betriebsinformationen zu erhalten, die Zustandsinformationen und Positionsinformationen über die Arbeitsvorrichtung (11) beinhalten, und die erhaltenen Betriebsinformationen an einen Managementserver (3) auszugeben; und das Betriebsinformationsmanagementsystem (1) dazu konfiguriert ist, Folgendes auszuführen:
Senden von individuellen Informationen über die Arbeitsvorrichtung (11) an den Managementserver (3);
Erhalten von Informationen über das Abtastintervall, das den individuellen Informationen über die Arbeitsvorrichtung (11) zugeordnet ist, von einer Abtaststeuerungsinformationsspeichereinheit (79) des Managementservers (3);
Senden der Abtastintervallinformationen über ein Netzwerk (5) an das Kommunikationsterminal (2);
Erhalten der Positionsinformationen von einer Positionserkennungsvorrichtung (51) in der Arbeitsvorrichtung (11) in dem erhaltenen Abtastintervall und Erhalten von Zustandsinformationen von einer Arbeitsvorrichtungssteuerung (10) in der Arbeitsvorrichtung (11), wobei ein Informationsterminal (7) die Zustandsinformationen und die Positionsinformationen, die in jedem Abtastintervall erhalten werden, als Betriebsinformationen in einer Speichereinheit (56) des Informationsterminals (7) sammelt;
Senden der gesammelten Betriebsinformationen und der individuellen Informationen über die Arbeitsvorrichtung (11) in Zuordnung zueinander an den Managementserver (3);
Speichern der empfangenen Betriebsinformationen in einer Betriebsinformationsspeichereinheit (76) des Managementservers (3) durch eine Informationsmanagementeinheit (62) des Managementservers (3); und
Erzeugen, durch eine Landwirtschaftsnutzungsinformationserzeugungseinheit des Managementservers (3), von Landwirtschaftsnutzungsinformationen auf der Basis der in der Betriebsinformationsspeichereinheit (76) gespeicherten Betriebsinformationen, um sie in einer Landwirtschaftsnutzungsinformationsspeichereinheit (77) des Managementservers zu speichern.

10. Betriebsinformationsmanagementprogramm, um eine Steuerungsvorrichtung (40) zu veranlassen, eine Verarbeitung auszuführen, umfassend:
Erkennen, für jeden Benutzer, einer Zugriffsfrequenz entsprechend Landwirtschaftsnutzungsinformationen, die einen Index von Arbeit darstellen, die von einer Arbeitsvorrichtung (11), die ein an einer Arbeitsvorrichtung (11) montiertes Kommunikationsterminal (2) beinhaltet, auf einem Feld durchgeführt wird; und
Festlegen, für jeden Benutzer, eines Abtastintervalls, um Betriebsinformationen zu erhalten, die einen Betriebszustand der Arbeitsvorrichtung gemäß der Zugriffsfrequenz angeben, **gekennzeichnet dadurch, dass**
eine Arbeitsvorrichtungssteuerung (10) dazu konfiguriert ist, von verschiedenen Arten von Sensoren Zustandsinformationen zu erhalten, die einen Zustand der Arbeitsvorrichtung (11) angeben;
das Kommunikationsterminal (2) dazu konfiguriert ist, Betriebsinformationen zu erhalten, die Zustandsinformationen und Positionsinformationen über die Arbeitsvorrichtung (11) beinhalten, und die erhaltenen Betriebsinformationen an einen Managementserver (3) auszugeben; und das Betriebsinformationsmanagementprogramm dazu konfiguriert ist, Folgendes auszuführen:
Senden von individuellen Informationen über die Arbeitsvorrichtung (11) an den Managementserver (3);
Erhalten von Informationen über das Abtastintervall, das den individuellen Informationen über die Arbeitsvorrichtung (11) zugeordnet ist, von einer Abtaststeuerungsinformationsspeichereinheit (79) des Managementservers (3);
Senden der Abtastintervallinformationen über ein Netzwerk (5) an das Kommunikationsterminal (2);
Erhalten der Positionsinformationen von einer Positionserkennungsvorrichtung (51) in der Arbeitsvorrichtung (11) in dem erhaltenen Abtastintervall und Erhalten von Zustandsinformationen von einer Arbeitsvorrichtungssteuerung (10) in der Arbeitsvorrichtung (11), wobei ein Informationsterminal (7) die Zustandsinformationen und die Positionsinformationen, die in jedem Abtastintervall erhalten werden, als Betriebsinformationen in einer Speichereinheit (56) des Informationsterminals (7) sammelt;
Senden der gesammelten Betriebsinformationen und der individuellen Informationen über die Arbeitsvorrichtung (11) in Zuordnung zueinander an den Managementserver (3);
Speichern der empfangenen Betriebsinformationen in einer Betriebsinformationsspeichereinheit (76) des Managementservers (3) durch eine Informationsmanagementeinheit (62) des Managementservers (3); und
Erzeugen, durch eine Landwirtschaftsnutzungsinformationserzeugungseinheit des Managementservers (3), von Landwirtschaftsnutzungsinformationen auf der Basis der in der Betriebsinformationsspeichereinheit (76) gespeicherten Betriebsinformationen, um sie in einer Landwirtschaftsnutzungsinformationsspeichereinheit (77) des Managementservers zu speichern.

## Revendications

1. Procédé de gestion des informations d'exploitation, le procédé comprenant :
la détection pour chaque fréquence d'accès utilisateur correspondant des informations d'utilisation agricole qui représentent un indice de travail effectué dans un champ par un dispositif de travail (11) comprenant un terminal de communication (2) monté sur le dispositif de travail (11) ; et
la détermination pour chaque utilisateur d'un intervalle d'échantillonnage pour obtenir des informations d'exploitation qui indiquent un état de fonctionnement du dispositif de travail (11) en fonction de la fréquence d'accès, **caractérisé en ce**
**qu'**un contrôleur de dispositif de travail (10) obtient à partir de divers types de capteurs des informations d'état qui indiquent un état du dispositif de travail (11) ;
le terminal de communication (2) obtient des informations d'exploitation, y compris des informations d'état et des informations de position sur le dispositif de travail (11), et transmet les informations d'exploitation obtenues à un serveur de gestion (3) ; et le procédé comprend les étapes suivantes :
la transmission des informations individuelles sur le dispositif de travail (11) au serveur de gestion (3) ;
l'obtention des informations sur l'intervalle d'échantillonnage associé aux informations individuelles sur le dispositif de travail (11) à partir d'une unité de stockage d'informations de contrôle d'échantillonnage (79) du serveur de gestion (3) ;
la transmission des informations d'intervalle d'échantillonnage via un réseau (5) au terminal de communication (2) ;
l'obtention des informations de position à partir d'un dispositif de détection de position (51) dans le dispositif de travail (11) à l'intervalle d'échantillonnage obtenu et l'obtention des informations d'état à partir d'un contrôleur de dispositif de travail (10) dans le dispositif de travail (11) dans lequel un terminal d'information (7) accumule comme informations d'exploitation les informations d'état et les informations de position obtenues à chaque intervalle d'échantillonnage dans une unité de stockage (56) du terminal d'information (7) ;
la transmission des informations d'exploitation accumulées et des informations individuelles sur le dispositif de travail (11) en association les unes avec les autres au serveur de gestion (3) ;
le stockage des informations d'exploitation reçues dans une unité de stockage d'informations d'exploitation (76) du serveur de gestion (3) par une unité de gestion d'informations (62) du serveur de gestion (3) ; et
la génération d'informations d'utilisation agricole sur la base des informations d'exploitation stockées dans l'unité de stockage d'informations d'exploitation (76) pour les stocker dans une unité de stockage d'informations d'utilisation agricole (77) du serveur de gestion par une unité de génération d'informations d'utilisation agricole du serveur de gestion (3).

2. Procédé de gestion des informations d'exploitation selon la revendication 1, dans lequel
la détermination de l'intervalle d'échantillonnage pour chaque utilisateur comprend :
la détermination d'une position de la fréquence d'accès d'un utilisateur correspondant dans une distribution de la fréquence d'accès ; et
la détermination de l'intervalle d'échantillonnage en fonction de la position déterminée de la fréquence d'accès.

3. Procédé de gestion des informations d'exploitation selon la revendication 1 ou la revendication 2, dans lequel
la détermination de l'intervalle d'échantillonnage pour chaque utilisateur comprend la détermination de l'intervalle d'échantillonnage en comparant un numéro d'accès indiquant la fréquence d'accès, à une valeur seuil.

4. Procédé de gestion des informations d'exploitation selon l'une quelconque des revendications 1 à 3, dans lequel
l'intervalle d'échantillonnage pour un utilisateur avec une fréquence d'accès relativement élevée est inférieur ou égal à l'intervalle d'échantillonnage pour un utilisateur avec une fréquence d'accès relativement faible.

5. Procédé de gestion des informations d'exploitation selon l'une quelconque des revendications 1 à 4, le procédé comprenant :
le stockage des informations d'exploitation et les informations d'identification d'utilisateur qui identifient un utilisateur en association les unes avec les autres ; et
la génération des informations d'utilisation agricole pour chaque utilisateur sur la base des informations d'exploitation en association avec les informations d'identification d'utilisateur.

6. Procédé de gestion des informations d'exploitation selon l'une quelconque des revendications 1 à 5, le procédé comprenant :
le stockage de l'intervalle d'échantillonnage correspondant à une pluralité de périodes ;
la détermination d'une première période à laquelle appartient le temps présent parmi la pluralité de périodes ; et
la détermination de l'intervalle d'échantillonnage en fonction de la première période déterminée.

7. Procédé de gestion des informations d'exploitation selon l'une quelconque des revendications 1 à 6, le procédé comprenant :
le stockage d'un intervalle d'échantillonnage pour obtenir des informations d'exploitation qui indiquent un état d'exploitation d'un dispositif de travail (11) effectuant un travail dans un champ correspondant à une pluralité de périodes ;
la détermination d'une première période à laquelle appartient le temps présent parmi la pluralité de périodes ; et
la détermination de l'intervalle d'échantillonnage en fonction de la première période déterminée.

8. Procédé de gestion des informations d'exploitation selon la revendication 7, dans lequel
la pluralité de périodes comprend une deuxième période,
la première période est une période qui a une fréquence d'utilisation du dispositif de travail (11) plus élevée que la deuxième période, et
un premier intervalle d'échantillonnage défini dans un cas où le temps présent appartenant à la première période est plus court qu'un deuxième intervalle d'échantillonnage défini dans un cas où le temps présent appartenant à la deuxième période.

9. Système de gestion des informations d'exploitation (1) comprenant :
une unité de détection de numéro d'accès (65) qui détecte pour chaque fréquence d'accès utilisateur correspondant à des informations d'utilisation agricole qui représentent un indice de travail effectué dans un champ par un dispositif de travail (11) comprenant un terminal de communication (2) monté sur un dispositif de travail (11) ; et
une unité de détermination de l'intervalle d'échantillonnage (66) qui détermine pour chaque utilisateur un intervalle d'échantillonnage pour obtenir des informations d'exploitation qui indiquent un état d'exploitation du dispositif de travail (11) en fonction de la fréquence d'accès, **caractérisé en ce**
**qu'**un contrôleur de dispositif de travail (10) est configuré pour obtenir à partir de divers types de capteurs des informations d'état qui indiquent un état du dispositif de travail (11) ;
le terminal de communication (2) est configuré pour obtenir des informations d'exploitation, notamment des informations d'état et des informations de position sur le dispositif de travail (11), et pour transmettre les informations d'exploitation obtenues à un serveur de gestion (3) ; et le système de gestion des informations d'exploitation (1) est configuré pour exécuter :
la transmission des informations individuelles sur le dispositif de travail (11) au serveur de gestion (3) ;
l'obtention des informations sur l'intervalle d'échantillonnage associé aux informations individuelles sur le dispositif de travail (11) à partir d'une unité de stockage d'informations de contrôle d'échantillonnage (79) du serveur de gestion (3) ;
la transmission des informations d'intervalle d'échantillonnage via un réseau (5) au terminal de communication (2);
l'obtention des informations de position à partir d'un dispositif de détection de position (51) dans le dispositif de travail (11) à l'intervalle d'échantillonnage obtenu et l'obtention des informations d'état à partir d'un contrôleur de dispositif de travail (10) dans le dispositif de travail (11) dans lequel un terminal d'information (7) accumule comme informations d'exploitation les informations d'état et les informations de position obtenues à chaque intervalle d'échantillonnage dans une unité de stockage (56) du terminal d'information (7) ;
la transmission des informations d'exploitation accumulées et des informations individuelles sur le dispositif de travail (11) en association les unes avec les autres au serveur de gestion (3) ;
le stockage des informations d'opération reçues dans une unité de stockage d'informations d'exploitation (76) du serveur de gestion (3) par une unité de gestion d'informations (62) du serveur de gestion (3) ; et
la génération d'informations d'utilisation agricole sur la base des informations d'exploitation stockées dans l'unité de stockage d'informations d'exploitation (76) pour les stocker dans une unité de stockage d'informations d'utilisation agricole (77) du serveur de gestion par une unité de génération d'informations d'utilisation agricole du serveur de gestion (3).

10. Programme de gestion des informations d'exploitation pour amener un dispositif de contrôle (40) à exécuter un traitement comprenant :
la détection pour chaque fréquence d'accès utilisateur correspondant des informations d'utilisation agricole qui représentent un indice de travail effectué dans un champ par un dispositif de travail (11) comprenant un terminal de communication (2) monté sur le dispositif de travail (11) ; et
la détermination pour chaque utilisateur d'un intervalle d'échantillonnage pour obtenir des informations d'exploitation qui indiquent un état de fonctionnement du dispositif de travail en fonction de la fréquence d'accès, **caractérisé en ce**
**qu'**un contrôleur de dispositif de travail (10) est configuré pour obtenir à partir de divers types de capteurs des informations d'état qui indiquent un état du dispositif de travail (11) ;
le terminal de communication (2) est configuré pour obtenir des informations d'exploitation, notamment des informations d'état et des informations de position sur le dispositif de travail (11), et pour transmettre les informations d'exploitation obtenues à un serveur de gestion (3) ; et le système de gestion des informations d'exploitation est configuré pour exécuter :
la transmission des informations individuelles sur le dispositif de travail (11) au serveur de gestion (3) ;
l'obtention des informations sur l'intervalle d'échantillonnage associé aux informations individuelles sur le dispositif de travail (11) à partir d'une unité de stockage d'informations de contrôle d'échantillonnage (79) du serveur de gestion (3) ;
la transmission des informations d'intervalle d'échantillonnage via un réseau (5) au terminal de communication (2);
l'obtention des informations de position à partir d'un dispositif de détection de position (51) dans le dispositif de travail (11) à l'intervalle d'échantillonnage obtenu et l'obtention des informations d'état à partir d'un contrôleur de dispositif de travail (10) dans le dispositif de travail (11) dans lequel un terminal d'information (7) accumule comme informations d'exploitation les informations d'état et les informations de position obtenues à chaque intervalle d'échantillonnage dans une unité de stockage (56) du terminal d'information (7) ;
la transmission des informations d'exploitation accumulées et des informations individuelles sur le dispositif de travail (11) en association les unes avec les autres au serveur de gestion (3) ;
le stockage des informations d'exploitation reçues dans une unité de stockage d'informations d'exploitation (76) du serveur de gestion (3) par une unité de gestion d'informations (62) du serveur de gestion (3) ; et
la génération d'informations d'utilisation agricole sur la base des informations d'exploitation stockées dans l'unité de stockage d'informations d'exploitation (76) pour les stocker dans une unité de stockage d'informations d'utilisation agricole (77) du serveur de gestion par une unité de génération d'informations d'utilisation agricole du serveur de gestion (3).
